# EUROPEAN PATENT APPLICATION

(11) **EP 4 725 692 A1**
(43) Date of publication of application: **15.04.2026**
(21) Application number: 24219893.5
(22) Date of filing: 13.12.2024
(51) Int. Cl.: B32B 21/04, B27M 3/04, B32B 21/13, B32B 21/14, E04F 15/04

(54) **TWO-LAYER ENGINEERED WOOD FLOORING, AND MANUFACTURING METHOD THEREFOR**

(30) Priority: 14.10.2024 CN 202411430220
(71) Applicant: Dalian Jaenmaken Wood Industry Co., Ltd., Dalian City Liaoning 116200 (CN)
(72) Inventor: MA, Zhiguo, Yantai City, Shandong Province, 264000 (CN)
(74) Representative: Santarelli

(57) **Abstract**

Provided is a two-layer engineered wood flooring, and a manufacturing method therefor, relating to the technical field of wood floor design and manufacturing. The technical problem of excessive bending performance and poor stability in the prior art. The two-layer engineered wood flooring includes a top veneer, core veneers, and a back strip. Multiple core veneers are provided and arranged on the top veneer side by side, a spacing gap is formed between adjacent core veneers, and the back strip is arranged on the core veneer. The back strip is connected to at least two core veneers, and the multiple core veneers are all connected to the back strip. By arranging the multiple core plates side by side and connecting the core plates by the back strip, the engineered wood flooring is guaranteed to have good stability while having good flexibility.

## Description

### Technical Field

The present disclosure relates to the technical field of design and manufacturing of wood floors, and in particular to a two-layer engineered wood flooring, and a manufacturing method therefor.

### Background of the Invention

Engineered wood flooring is a floor board manufactured by interlacing and laminating boards of different tree species. At present, the engineered wood floorings on the market mainly include three-layers engineered wood floorings and multi-layer engineered wood floorings. Such engineered wood floorings have poor flexibility and geothermal heat conductivity in actual use, so there is a two-layer engineered wood flooring on the market. Such a two-layer engineered wood flooring usually pursues flexibility to meet the bending requirements of laying. Such a board is usually obtained by gluing two boards together and then forming a parallel groove in the lower board, which makes the whole engineered wood flooring excessively flexible, and leads to poor stability. Therefore, the two-layer engineered wood flooring is not suitable for laying into a floor, and fails to meet the needs of users.

### Summary of the Invention

An objective of the present disclosure is to provide a two-layer engineered wood flooring, and a manufacturing method therefor, thus solving the technical problem of excessive bending performance and poor stability in the prior art. Many technical effects that can be produced by the preferred technical solution among many technical solutions provided by the present disclosure are described in detail below.

To achieve the objective above, the present disclosure employs the following technical solution:
The present disclosure provides a two-layer engineered wood flooring, including a top veneer, core veneers, and a back strip. Multiple core veneers are provided and arranged on the top veneer side by side, a spacing gap is formed between adjacent core veneers, and the back strip is arranged on the core veneers. The back strip is connected to at least two core veneers, and the multiple core veneers are connected to the back strip.

Preferably, the spacing gaps have the same width.

Preferably, an end surface, away from the top veneer, of the core veneer is provided with a mounting groove, and the back strip is arranged in the mounting groove. An end surface, away from the top veneer, of the back strip is flush with an end surface, away from the top veneer, of the core veneer.

Preferably, the multiple core veneers on the top veneer are all connected to the back strip.

Preferably, the number of the back strips is two or more.

Preferably, a width of the back strip ranges from 8 mm to 50 mm, and a thickness of the back strip ranges from 2 mm to 6 mm.

Preferably, the back strip is made of wood.

The present disclosure provides a manufacturing method for a two-layer engineered wood flooring, including the following steps:
preparing a top veneer, a core veneer, and a back strip;
carrying out kiln drying balance on the top veneer and the back strip;
carrying out board conditioning on the top veneer and the core veneer;
gluing the top veneer and/or the core veneer, and carrying out lay-up and cold-pressing;
ageing and curing a blank;
routing a back groove on an end surface, away from the top veneer, of the core veneer;
embedding and pressing the back strip into the back groove to form a composite floor;
conditioning the composite floor for 72 hours;
finishing, repairing, sanding and polishing the composite floor;
forming a tongue-and-groove joint in the composite floor; and
painting and packaging the composite floor with the tongue-and-groove joint.

By adopting the technical solution, the present disclosure at least has the following beneficial effects:
The two-layer engineered wood flooring includes a top veneer, core veneers, and a back strip. Multiple core veneers are provided and arranged on the top veneer side by side, a spacing gap is formed between adjacent core veneers, and the back strip is arranged on the core veneers. The back strip is connected to at least two core veneers, and the multiple core veneers are connected to the back strip. The multiple core veneers are arranged side by side and provided with spacing gaps to ensure good flexibility of the two-layer engineered wood flooring, thereby ensuring the smoothness during laying. By arranging the back strip on the core veneers and connecting the core veneers together by the back strip, the two-layer engineered wood flooring has good stability, and thus can satisfy the needs of users.

It should be understood that both the above general description and the following detailed description are exemplary and explanatory only, and are not restrictive of the present disclosure.

### Brief Description of the Drawings

To describe the technical solutions of the present disclosure or in the prior art more clearly, the following briefly introduces the accompanying drawings required for describing the embodiments or the prior art. Apparently, the accompanying drawings in the following description show merely some embodiments of the present disclosure, and those of ordinary skill in the art may still derive other drawings from these accompanying drawings without creative efforts.
FIG. 1 is a structural schematic diagram of a two-layer engineered wood flooring according to an embodiment of the present disclosure;
FIG. 2 is a schematic diagram of an exploded structure of a two-layer engineered wood flooring according to an embodiment of the present disclosure.

In the drawings: 1-top veneer; 2-core veneer; 3-back strip; 4-spacing gap; 5-mounting groove.

### Detailed Description of Embodiments

To make the objectives, technical solutions and advantages of the present disclosure more clearly, the following describes the technical solutions in the embodiments of the present disclosure in detail. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

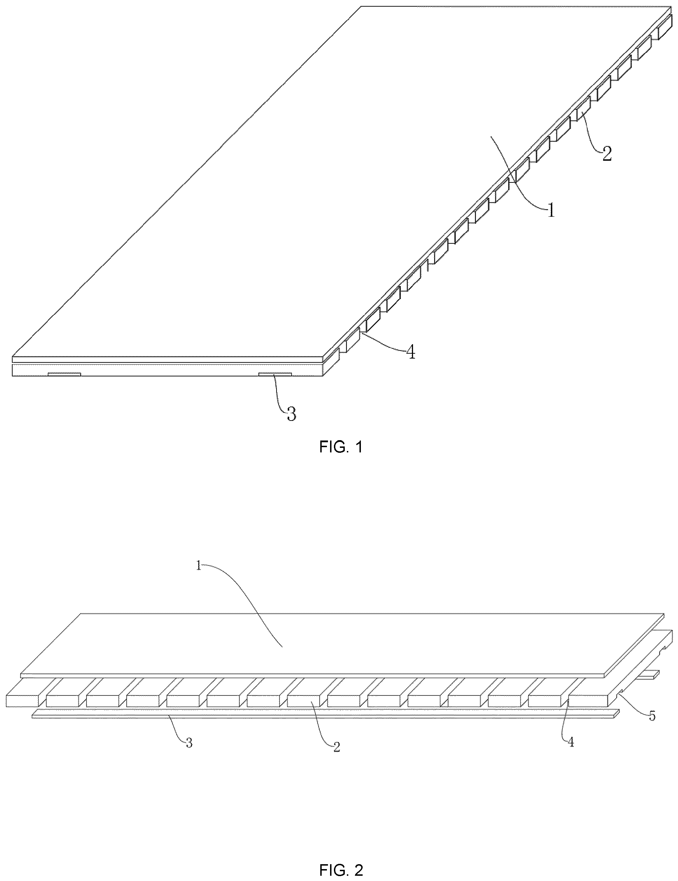

A specific embodiment provided by the present disclosure provides a two-layer engineered wood flooring, which, in conjunction with FIG. 1 and FIG. 2, mainly includes a top veneer 1, a core veneer 2, and a back strip 3.

There are multiple cover veneers 2 which are arranged on the top veneer 1 side by side, and there is a spacing gap 4 between the adjacent core veneers 2, such that the two-layer engineered wood flooring has high flexibility, and a flatness requirement can be achieved easier when laying the floor. The back strip 3 is arranged on the core veneers 2, and the back strip 3 is connected to at least two core veneers 2. The core plates 2 are connected by the back strip 3, and the stability of the two-layer engineered wood flooring is increased through the connection between the core veneers 2. Moreover, the multiple core veneers 2 arranged on the top veneer 1 are connected to the back strip 3 to guarantee the stability of the whole two-layer engineered wood flooring.

In a specific embodiment, the spacing gaps 4 have the same width, and the structure of the two-layer engineered wood flooring is more stable by arranging the multiple core veneers 2 with equal spacing gap 4.

In some embodiments, an end surface, away from the top veneer 1, of the core veneer 2 is provided with a mounting groove 5, and the back strip 3 is arranged in the mounting groove 5. An end surface, away from the top veneer 1, of the back strip 3 is flush with an end surface, away from the top veneer 1, of the core veneer 2.

The mounting groove 5 has a width ranging from 8 mm to 50 mm, and a depth ranging from 2 mm to 6 mm.

In some embodiments, the multiple core veneers 2 on the top veneer 1 are connected to the back strip 3. All core veneers 2 on the whole top veneer 1 are connected together by one back strip 3, thus further ensuring the overall stability of the two-layer engineered wood flooring.

In some embodiments, the number of the back strips 3 may be two or more, thus making the connection of the core veneers 2 more stable and the overall stability of the two-layer engineered wood flooring better.

Specifically, in the present disclosure, the back strip 3 has a width ranging from 8 mm to 50 mm, and a thickness ranging from 2 mm to 6 mm.

The back strip 3 is made of wood, specifically birch, Pinus sylvestris, oak, etc., preferably birch. The moisture content of the back strip 3 is determined according to the top veneer 1.

Specifically, the top veneer 1 is suitable for various woods, the top veneer 1 has a thickness ranging from 2.5 mm to 6 mm, and the moisture content is preferably 6%.

The cover veneer 2 may be made of various types of pines, Chinese fir, broadleaf hardwoods and so on. The core veneer 2 has a length ranging from 300 mm to 3000 mm, a width ranging from 50 mm to 300 mm, and a thickness ranging from 10 mm to 20 mm, a spacing gap between the core veneers 2 ranges from 1 mm to 1.5 mm, and the moisture content of the core veneer 2 is 9-11%.

A specific embodiment of the present disclosure provides a manufacturing method for a two-layer engineered wood flooring, including the following steps:
preparing a top veneer 1, a core veneer 2, and a back strip 3;
carrying out kiln drying balance on the top veneer 1 and the back strip 3;
carrying out board conditioning on the top veneer 1 and the core veneer 2;
gluing the top veneer 1 and/or the core veneer 2, and carrying out lay-up and cold-pressing;
ageing and curing a blank;
routing a back groove on an end surface, away from the top veneer 1, of the core veneer 2;
embedding and pressing the back strip 3 into the back groove to form a composite floor;
conditioning the composite floor for 72 hours;
finishing, repairing, sanding and polishing the composite floor;
forming a tongue-and-groove joint in the composite floor; and
painting and packaging the composite floor with the tongue-and-groove joint.

In the present disclosure, the terms "one embodiment", "some embodiments", "examples", "specific examples" or "some examples" mean that specific features, structures, materials or characteristics described in connection with this embodiment or example are included in at least one embodiment or example of the present disclosure. In this specification, the schematic representations of the above terms are not necessarily aimed at the same embodiment or example. Moreover, specific features, structures, materials or characteristics described may be combined in any one or more embodiments or examples in a suitable manner. In addition, those skilled in the art can combine different embodiments or examples and features of different embodiments or examples described in this specification without contradicting each other.

The above is only the specific embodiment of the present disclosure, but the scope of protection of the present disclosure is not limited thereto. Any change or substitution that can be easily thought of by any person skilled in the art within the technical scope disclosed in the present disclosure should be covered by the scope of protection of the present disclosure. Therefore, the scope of protection of the present disclosure shall be subject to the that of the appended claims.

## Claims

1. A two-layer engineered wood flooring, comprising a top veneer, core veneers, and a back strip, wherein a plurality of core veneers are provided and arranged on the top veneer side by side, a spacing gap is formed between adjacent core veneers, and the back strip is arranged on the core veneers; and the back strip is connected to at least two core veneers, and the plurality of core veneers are connected to the back strip.

2. The two-layer engineered wood flooring according to claim 1, wherein the spacing gaps have the same width.

3. The two-layer engineered wood flooring according to claim 1, wherein an end surface, away from the top veneer, of the core veneer is provided with a mounting groove, and the back strip is arranged in the mounting groove; and an end surface, away from the top veneer, of the back strip is flush with an end surface, away from the top veneer, of the core veneer.

4. The two-layer engineered wood flooring according to claim 1, wherein the plurality core veneers on the top veneer are all connected to the back strip.

5. The two-layer engineered wood flooring according to claim 1, wherein the number of the back strips is two or more.

6. The two-layer engineered wood flooring according to claim 1, wherein a width of the back strip ranges from 8 mm to 50 mm, and a thickness of the back strip ranges from 2 mm to 6 mm.

7. The two-layer engineered wood flooring according to claim 1, wherein the back strip is made of wood.

8. A manufacturing method for the two-layer engineered wood flooring according to any one of claims 1 to 7, comprising the following steps:
preparing a top veneer, a core veneer, and a back strip;
carrying out kiln drying balance on the top veneer and the back strip;
carrying out board conditioning on the top veneer and the core veneer;
gluing the top veneer and/or the core veneer, and carrying out lay-up and cold-pressing;
ageing and curing a blank;
routing a back groove on an end surface, away from the top veneer, of the core veneer;
embedding and pressing the back strip into the back groove to form a composite floor;
conditioning the composite floor for 72 hours;
finishing, repairing, sanding and polishing the composite floor;
forming a tongue-and-groove joint in the composite floor; and
painting and packaging the composite floor with the tongue-and-groove joint.
